(19) Europäisches Patentamt
European Patent Office
Office européen des brevets

(11) Veröffentlichungsnummer : **0 064 945**
**B1**

(12) # EUROPÄISCHE PATENTSCHRIFT

(45) Veröffentlichungstag der Patentschrift : **03.04.85**

(51) Int. Cl.⁴ : **C 08 G 59/68**, C 08 G 65/10

(21) Anmeldenummer : **82810180.8**

(22) Anmeldetag : **30.04.82**

(54) **Heisspolymerisierbare Massen.**

(30) Priorität : **06.05.81 GB 8113774**

(43) Veröffentlichungstag der Anmeldung : **17.11.82 Patentblatt 82/46**

(45) Bekanntmachung des Hinweises auf die Patenterteilung : **03.04.85 Patentblatt 85/14**

(84) Benannte Vertragsstaaten : **BE CH DE FR GB IT LI NL SE**

(56) Entgegenhaltungen :
**EP-A- 0 022 081**
**EP-A- 0 035 969**
**EP-A- 0 044 274**

(73) Patentinhaber : **CIBA-GEIGY AG**
**Postfach**
**CH-4002 Basel (CH)**

(72) Erfinder : **Irving, Edward, Dr.**
**41, Swaffham Road**
**Burwell Cambridge CB5 0AN (GB)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**EP 0 064 945 B1**

**Beschreibung**

Vorliegende Erfindung betrifft heisspolymerisierbare Massen, die aus kationisch polymerisierbaren Epoxiden, aromatischen Sulfoxoniumsalzen und organischen Oxydationsmitteln bestehen, sowie die Verwendung dieser Massen als Laminierharze, Oberflächenbeschichtungen, Klebstoffe und dergleichen.

Aus der britischen Patentschrift Nr. 1 516 511 ist es bekannt, dass aus einem Mono-1,2-epoxid, einem Epoxidharz (d. h. einer Substanz, die im Durchschnitt mehr als eine 1,2-Epoxidgruppe enthält) oder einem polymerisierbaren Gemisch daraus bestehende Massen mittels eines strahlungsempfindlichen aromatischen Oniumsalzes des Sauerstoffs, Schwefels, Selens oder Tellurs, das in einer Menge vorliegt, die fähig ist, die Polymerisation oder Härtung des Epoxids (bzw. Polyepoxids) durch Freisetzung eines Lewis-Säurekatalysators bei der Belichtung mit Strahlungsenergie zu bewirken, polymerisiert oder gehärtet werden können. Die einzigen solchen, in der Patentschrift beschriebenen Salze entsprechen der Formel

$$\left[(R)_a(R^1)_b(R^2)_cX\right]_d^{+} \left[MQ_e\right]^{(e-f)-} \qquad (I)$$

worin R einen einwertigen Rest, $R^1$ eine Alkyl-, Cycloalkyl- oder substituierte Alkylgruppe, $R^2$ einen mehrwertigen aliphatischen oder aromatischen, eine heterocyclische oder kondensierte Ringstruktur bildenden Rest, X Sauerstoff, Schwefel, Selen oder Tellur, M ein Atom eines Metalls oder Metalloids wie Antimon, Eisen, Zinn, Wismut, Aluminium, Gallium, Indium, Titan, Zirkon, Scandium, Vanadium, Chrom, Mangan, Bor, Phosphor oder Arsen, Q einen Halogenrest, a 0, 1, 2 oder 3, b 0, 1 oder 2 und c 0 oder 1 bedeuten, wobei die Summe (a + b + c) 3 oder die Wertigkeit von X ist, d gleich (e-f) ist, als ganze Zahl von 2 bis 7 die Wertigkeit von M darstellt und e grösser als f und eine ganze Zahl bis 8 ist.

Ebenfalls ist es in der Patentschrift offenbart, dass sich die Polymerisation oder Härtung der Masse durch Aktivierung des Oniumsalzes zur Freisetzung des Lewis-Säurekatalysators erreichen lässt, und dass man diese Aktivierung durch Erhitzen der Masse auf eine Temperatur im Bereich von 150 °C bis 250 °C (oder auch durch Strahlenbelichtung) bewirken kann.

In einer späteren PCT-Anmeldung (WO 80/01723) beschreibt derselbe Patentinhaber heisshärtbare Massen, die aus einem kationisch polymerisierbaren organischen Material wie einem Epoxidharz und einem Gemisch aus einem Dialkylhydroxyaryl-sulfoniumsalz und einem organischen Oxydationsmittel bestehen, wobei der letztere Begriff organische Peroxide, aromatische Jodosoverbindungen und Chinone sowie auch Azo-bis-(alkylnitrile) wie Azo-bis-(isobutyronitril) umfassen soll. Die angeführten Dialkyl-hydroxyarylsulfoniumsalze entsprechen der allgemeinen Formel

$$\left[R(R^1)_aS\right]^{+} \left[Y\right]^{-} \qquad (II)$$

worin R für einen aromatischen Rest mit 6 bis 20 Kohlenstoffatomen und 1 bis 3 kerngebundenen Hydroxylresten, $R^1$ jeweils für gleiche oder verschiedene Alkylreste mit 1 bis 8 Kohlenstoffatomen oder einen zur Bildung eines cycloaliphatischen oder heterocyclischen Rings fähigen Alkylenrest und $Y^-$ für ein nicht-nucleophiles Anion stehen sowie a 1 oder 2 ist, nämlich 1, wenn $R^1$ eine Alkylengruppe bedeutet, und 2, wenn $R^1$ eine Alkylgruppe bedeutet.

Typische dort angegebene Salze der Formel II sind Dimethyl-4-hydroxy-3,5-dimethoxyphenylsulfonium-hexafluoroarsenat, Dimethyl-4-hydroxy-3,5-dimethylphenylsulfonium-hexafluoroantimonat, Dimethyl-4-hydroxynaphth-1-ylsulfonium-hexafluorophosphat und 4-Hydroxy-3,5-di-tert.-butyl-phenylthiophenium-hexafluoroarsenat.

In einer weiteren PCT-Anmeldung desselben Anmelders (WO 80/01695) wurden härtbare Massen beschrieben, die ein kationisch polymerisierbares organisches Material und einen Härter enthalten, der im wesentlichen aus einem Dialkyl-hydroxyaryl-sulfoniumsalz der allgemeinen Formel II und einem unter organischen aromatischen Jodosoverbindungen, Chinonen und organischen Peroxyden ausgewählten organischen Oxydationsmittel bestehen, wobei die Peroxyde in Gegenwart eines organischen Amins oder einer Uebergangsmetallverbindung als Zersetzungsbeschleuniger eingesetzt werden. Die härtbaren Massen sollen bei Mitverwendung eines flüchtigen organischen Lösungsmittels als Folge der exothermen Härtung weiche oder harte organische Harzschäume liefern.

Unveröffentlichte Versuche der gegenwärtigen Anmelder haben gezeigt, dass gewisse aromatische Sulfoxoniumsalze bei längerem Erhitzen mit 2,3-Epoxipropylgruppen enthaltenden Epoxidverbindungen auf diese keine Wirkung haben. So trat bei 30 Stunden langem Erhitzen auf 150 °C bei einer aus 2 Gewichtsteilen Dimethylphenacylsulfoxonium-hexafluorophosphat und 150 Gewichtsteilen des gebräuchlichsten handelsüblichen Epoxidharzes (2,2-Bis-(4-glycidyloxyphenyl)-propan) bestehenden Masse

keine Gelierung ein. In weiteren Versuchen wurden 4,5, 3 bzw. 4 Gewichtsteile Acetanilinodimethylsulfoxonium-hexafluorophosphat, p-Methylacetanilinodimethylsulfoxonium-hexafluorophosphat bzw. p-Chloracetanilinodimethylsulfoxonium-hexafluorophosphat eingesetzt, aber das Epoxidharz war nach 30 Stunden bei 120 °C, 30 Stunden bei 150 °C bzw. 40 Stunden bei 150 °C nicht geliert. In Gegenwart gewisser Oxydationsmittel härteten solche Massen jedoch schnell. Da es im oben angegebenen Stand der Technik beschrieben war, dass aromatische Sulfoniumsalze eine heisshärtende oder heisspolymerisierende Wirkung auf Epoxidharze ausüben, während die entsprechenden Sulfoxoniumsalze bei längerem Erhitzen mit den Epoxidharzen wirkungslos zu sein schienen, war nicht zu erwarten, dass diese Sulfoxoniumsalze in Gegenwart gewisser organischer Oxydationsmittel rasch eine Heisspolymerisation und Härtung des Epoxidharzes bewirken würden.

Gegenstand dieser Erfindung sind demnach heisspolymerisierbare Massen, die aus (a) einer mindestens eine direkt an ein Sauerstoffatom gebundene 2,3-Epoxipropylgruppe enthaltenden Verbindung, (b) einer heisspolymerisierenden Menge eines Gemisches aus (i) einem aromatischen Sulfoxoniumsalz der Formel

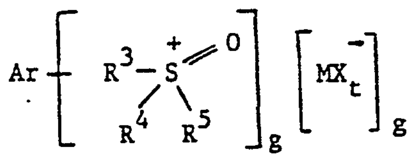

(III)

worin Ar für eine g-wertige aromatische Gruppe mit 4 bis 25 Kohlenstoffatomen, $R^3$ für eine Gruppe der Formel $—COCH_2—$, $—NHCOCH_2—$ oder $—CONHCOCH_2—$ und $R^4$ für eine Alkylgruppe mit 1 bis 18, vorzugsweise 1 bis 12, Kohlenstoffatomen, eine Alkenylgruppe mit 2 bis 6 Kohlenstoffatomen, eine Cycloalkylgruppe mit 3 bis 8 Kohlenstoffatomen, eine Cycloalkylgruppe mit 4 bis 10 Kohlenstoffatomen, eine Arylgruppe mit 4 bis 25 Kohlenstoffatomen oder eine Aralkylgruppe mit 5 bis 16 Kohlenstoffatomen stehen, $R^5$ dieselbe Bedeutung wie $R^4$ hat, aber auch eine Dialkylaminogruppe mit 2 bis 8 Kohlenstoffatomen oder, falls $R^4$ eine Alkylgruppe wie oben bedeutet, eine Arylaminogruppe mit 4 bis 8 Kohlenstoffatomen darstellen kann, M für ein Metall- oder Metalloidatom steht, t 4, 5 oder 6 und eins grösser als die Wertigkeit von M ist, X für ein Halogenatom, vorzugsweise Fluor oder Chlor, steht, mit der Massgabe, dass ein X eine Hydroxogruppe bedeuten kann, wenn M Antimon, t 6 und die übrigen fünf X je ein Fluoratom darstellen, und g 1 oder 2 ist, (ii) einem unter Chinonen, Peroxyden und aromatischen Jodosoverbindungen ausgewählten organischen Oxydationsmittel bestehen.

Gegenstand dieser Erfindung is ferner ein Verfahren zum Polymerisieren einer mindestens eine direkt an ein Sauerstoffatom gebundene 2,3-Epoxipropylgruppe enthaltenden Verbindung, welches dadurch gekennzeichnet ist, dass an Wärme auf diese erfindungsgemässe heisspolymerisierbare Masse einwirken lässt.

In der Formel III können Ar eine homocyclische oder heterocyclische Aryl- oder Arylengruppe, $R^4$ und $R^5$ eine homocyclische oder heterocyclische Aryl- oder Aralkylgruppe sowie $R^5$ auch eine homocyclische oder heterocyclische Arylaminogruppe darstellen ; « heterocyclisches Aryl », « heterocyclisches Arylen » und « heterocyclisches Aralkyl » sind dabei als eine aromatische Gruppe zu verstehen, in der mindestens eine $—CH_2—$ oder $—CH=$ Gruppe im Ring einer aromatischen Verbindung durch ein von Kohlenstoff verschiedenes Atom, üblicherweise Stickstoff, Sauerstoff oder Schwefel, ersetzt ist. Beispiele für heterocyclische Arylgruppen sind 2-Furyl- und 2-Pyridylreste und für heterocyclische Arylengruppen Furan-2,4-diyl- und Pyridin-2,6-diylreste. 2-Furylmethyl- und 2-Pyridylmethylreste sind Beispiele für heterocyclische Aralkylgruppen, und heterocyclische Aralkylengruppen sind z. B. Furan-2,4-dimethylen- und Pyridin-2,6-dimethylenreste.

Vorzugsweise steht Ar für eine homocyclische Aryl- oder Arylengruppe mit 6 bis 18 Kohlenstoffatomen, z. B. eine Anthrylen-, Phenanthrylen- oder Fluorenylengruppe ; insbesondere bedeutet es eine einkernige oder zweikernige Gruppe, vor allem eine Phenyl-, Napthyl-, Phenylen- oder Naphthylengruppe oder eine Gruppe der Formel

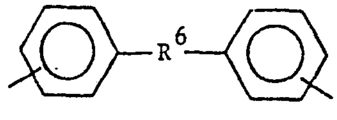

(IV)

worin $R^6$ eine Kohlenstoff-Kohlenstoffbindung, eine Aethersauerstoffatom, ein Schwefelatom oder einen Rest der Formel $—CH_2—$, $—C(CH_3)_2—$ oder $—SO_2—$ darstellt, wobei diese Gruppen gegebenenfalls in dem bzw. den Ring(en) durch eine oder zwei Alkyl- oder Alkoxygruppen mit jeweils 1 bis 4 Kohlenstoffatomen, durch eine oder zwei Nitrogruppen oder durch ein oder zwei Chlor-, Brom- oder Fluoratome substituiert sein können.

Spezielle Beispiele für geeignete Gruppen Ar sind Phenyl, p-Chlorphenyl, 3,4-Dichlorphenyl, o-Tolyl, p-Methoxyphenyl, 2,4-Toluylen, 2,6-Toluylen, o-, m- und p-Phenylen sowie Methylen-bis-(p-phenylen).

$R_4$ und $R_5$ stellen vorzugsweise je eine Phenyl- oder Naphthylgruppe dar, die gegebenenfalls in dem bzw. den Ring(en) durch eine oder zwei Alkyl- oder Alkoxygruppen mit jeweils 1 bis 4 Kohlenstoffatomen oder durch ein oder zwei Fluor-, Chlor- oder Bromatome substituiert sein können. Besonders bevorzugt bedeuten beide eine Alkylgruppe mit 1 bis 4 Kohlenstoffatomen und ganz besonders bevorzugt je eine Methylgruppe.

M steht vorzugsweise für ein Bor- oder Wismut- und insbesondere ein Antimon-, Arsen- oder Phosphoratom. Das bzw. die Anio(en) $MX_t^-$ können also beispielsweise Hexachlorowismutat oder Tetrafluoroborat und besonders bevorzugt Hydroxopentafluoroantimonat, Hexafluorophosphat, Hexafluoroantimonat oder Hexafluoroarsenat sein.

Spezielle Beispiele für geeignete Sulfoxoniumsalze sind : Dimethylphenacylsulfoxonium-hexafluorophosphat und und das entsprechende Hexafluoroantimonat, Diphenylsulfoxonium-hexafluorophosphat, 1,4-Bis-(1-oxo-(dimethylsulfoxonium)-äthyl)-benzol-dihexafluoroarsenat und das entsprechende Dihexafluoroantimonat, Acetanilinodimethylsulfoxonium-hexafluorophosphat und das entsprechende Hexafluoroarsenat, 3,4-Dichloracetanilinodimethylsulfoxonium-hexafluoroarsenat, Acetanilinodimethylsulfoxonium-tetrafluoroborat, p-Methylacetanilinodimethylsulfoxonium-hexafluorophosphat, Benzoylcarbamoyldimethylsulfoxonium-hexafluorophosphat, p-Chloracetanilinodimethylsulfoxonium-hexafluorophosphat und 2,4-Bis-(dimethylsulfoxonium-methyl-carbamoyl-)toluol-dihexafluorophosphat.

Die Sulfoxoniumsalze der Formel III lassen sich nach den folgenden Methoden herstellen.

1. Zur Herstellung von Sulfoxoniumsalzen der Formel III, worin $R^3$ für $—COCH_2$, Ar für eine Arylgruppe und g für 1 stehen, lässt man ein Aroylchlorid ArCOCl, wie Benzoylchlorid oder p-Toluoylchlorid, mit einem Sulfoxoniumylid der Formel

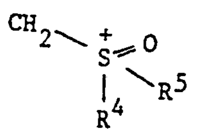

(V)

reagieren und neutralisiert anschliessend mit einer Säure der Formel $HMX_t$ (siehe U.S. Patentschrift Nr. 3 442 901). Ein Säureanhydrid ArCO—O—COAr lässt sich ebenfalls als Acylierungsmittel verwenden. So liefert die Umsetzung von 2 Mol Dimethylsulfoxoniummethylid (VII) mit Benzoylchlorid (VIII) Dimethylsulfoxoniumphenacyl-ylid (IX), dessen Neutralisation mit Hexafluorophosphorsäure bzw. Tetrafluoroborsäure das entsprechende Hexafluorophosphat (X, $MT_t^- = PF_6^-$) bzw. Tetrafluoroborat (X, $MX_t^- = BF_4^-$) ergibt. Das Hexafluorophosphat und ähnliche Salze wie das Hexafluoroarsenat (X, $MX_t^- = PF_6^-$ bzw. $AsF_6^-$) lassen sich auch durch doppelte Umsetzung mit dem Chlorid erhalten.

Neben dem Ylid bildet sich ein Sulfoxoniumsalz als Nebenprodukt ; so erhält man bei der Bildung des Ylids (IX) Trimethylsulfoxonium-chlorid (XI) als Nebenprodukt. Enthält dieses wie im vorliegenden Beispiel keine aromatische Gruppe, so ist es als Heisspolymerisiermittel unwirksam. Im allgemeinen stört es nicht, doch kann es gegebenenfalls von dem gewünschten Aracylsulfoxoniumsalz z. B. durch Extraktion des letzteren in Aceton abgetrennt werden.

Oxosulfoniumylide der Formel V sind aus Sulfoxoniumjodiden der Formel

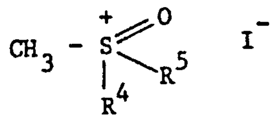

(VI)

durch Behandlung mit starken Basen wie Natriumhydrid zugänglich (E. J. Corey und M. Chaykovsky, J. Amer. Chem. Soc., 1962, *84*, 867).

2 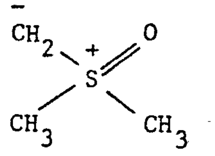 + $C_6H_5COCl$ .

(VII) (VIII)

(Siehe Figuren Seite 5 f.)

(Fortsetzung)

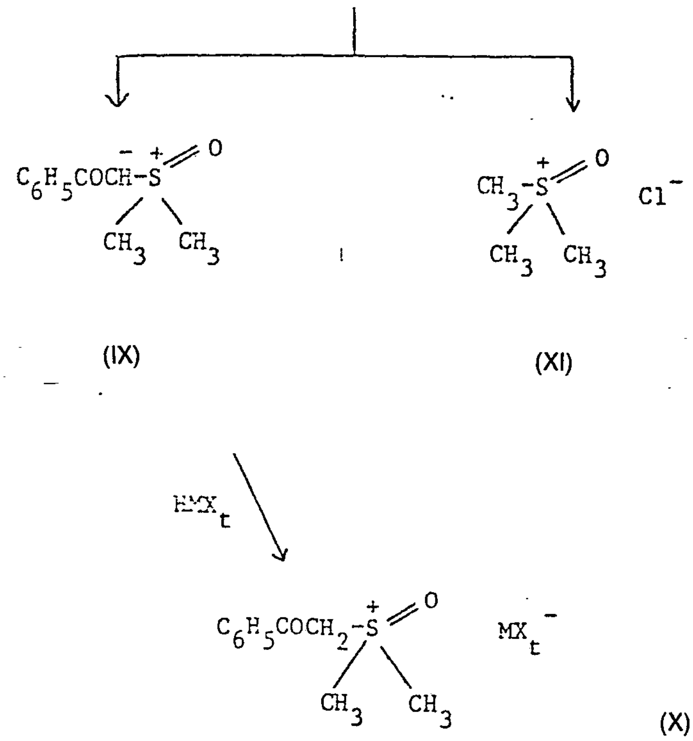


(IX)

(XI)

(X)

Die Umsetzung von 2 Mol Dimethylsulfoxonium-methylid (VII) mit Benzoesäureanhydrid liefert ein Gemisch aus Dimethylsulfoxoniumphenacyl-ylid (IX) und Trimethylsulfoxonium-benzoat ; das Ylid lässt sich von dem Benzoat abtrennen und auf ähnliche Weise durch Neutralisation mit Chlorwasserstoff in das Chlorid umwandeln.

2. Bei der Herstellung von Bis-sulfoxoniumsalzen der Formel III, worin $R^3$ für $—COCH_2—$ und g für 2 stehen, erhält man diese auf analoge Weise aus dem Sulfoxoniumylid der Formel V und einem Aroylendichlorid der Formel ClCOArCOCl.

3. Andernfalls kann man zur Herstellung eines Monosulfoxoniumsalzes bzw. Bis-sulfoxoniumsalzes der Formel III, worin $R^3$ für $—COCH_2—$ und g für 1 oder 2 stehen, ein α-Diazoacetophenon der Formel

$$ArCOCHN_2 \qquad (XII)$$

bzw. einer Bis-(α-diazo)-verbindung der Formel

$$N_2CHCOArCOCHN_2 \qquad (XIII)$$

in Gegenwart von Kupferacetylacetonat wie von M. Takebayashi u. a. (Chemistry Letters, *1973*, 809-12) beschrieben, jenachdem mit 1 bzw. 2 Mol eines Sulfoxyds der Formel $R^4R^5SO$ umsetzen, wobei sich ein Ylid der Formel

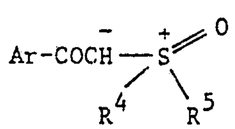

(XIV)

bzw. ein Bis-ylid der Formel

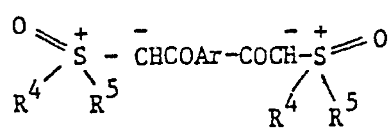

(XV)

bildet, welches mit einer Säure der Formel $HMX_t$ behandelt wird.

Sulfoxoniumsalze der Formel III, worin $R^3$ für eine carbamoylhaltige Gruppe steht, lassen sich nach folgenden Methoden herstellen.

4. Solche, worin $R^3$ für $-NHCOCH_2-$ steht, sind erhältlich durch Umsetzung eines aromatischen Isocyanats der Formel ArNCO mit einem Oxosulfoniumylid der Formel V zu einem Carbamoylylid der Formel

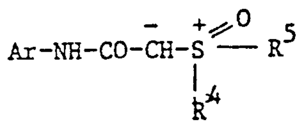

(XVI)

und nachfolgende Neutralisation mit einer Säure der Formel $HMX_t$. Die Umsetzung von Oxosulfoniumyliden mit Aryl- bzw. Aralkylisocyanaten wurde von H. König und H. Metzger, Chem. Ber., 1965, *98*, 3733-3747, beschrieben.

5. Analoge der obigen Verbindungen, worin $R^3$ für $-CONHCOCH_2-$ steht, lassen sich auf ähnliche Weise aus einem Aracylisocyanat der Formel ArCONCO herstellen. Die Reaktion von Acylisocyanaten mit Dimethylsulfoxonium-methylid wurde von O. Tsuge u. a., Tetrahedron, 1973, *29*, 1983-1990, beschrieben.

Wo eine bestimmte Säure der Formel $HMX_t$ nicht zur Verfügung steht oder schwierig zu handhaben ist, kann man Salze wie Hexafluorophosphate und Hexafluoroantimonate durch doppelte Umsetzung mit den entsprechenden Chloriden oder anderen geeigneten Salzen herstellen. Beispielsweise kann man Diphenylphenacylsulfoxonium-hexafluorophosphat durch Ausfällen beim Zusatz einer wässrigen Lösung von Kalium-hexafluorophosphat zu einer wässrigen Lösung von Diphenylphenacylsulfoxonium-chlorid erhalten. Die Hexafluoroantimonate können durch Zugabe von festem Natrium- oder Kalium-hexafluoroantimonat zu einer wässrigen Lösung des Sulfoxoniumchlorids hergestellt werden ; löst man das Natrium- oder Kalium-hexafluoroantimonat zunächst in Wasser, so ist das isolierte Produkt dann wegen Hydrolyse das Hydroxopentafluoroantimonat.

Die Komponente (a) kann beispielsweise ein eine einzige 2,3-Epoxipropylgruppe enthaltendes Mono-1,2-epoxid sein, wie ein Glycidyläther eines einwertigen Alkohols oder Phenols, z. B. n-Butyl-glycidyläther oder Phenylglycidyläther ; ferner kommen z. B. Glycidylester wie Glycidylacrilat oder Glycidylmetacrylat in Frage. Vorzugsweise handelt es sich um ein Epoxidharz, das mehr als eine direkt an ein Sauerstoffatom bzw. -atome gebundene 2,3-Epoxipropylgruppe pro Durchschnittsmolekül enthält.

Als Beispiele für solche Harze seien Polyglycidyl und Poly-(β-methylglycidyl)-ester erwähnt, die man durch Umsetzung einer Verbindung mit zwei oder mehr Carbonsäuregruppen pro Molekül mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z. B. Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure sowie von aromatischen Polycarbonsäuren wie Phthalsäure, Isophthalsäure und Terephthalsäure ableiten. Weitere geeignete Polyglycidylester sind durch Polymerisation der Glycidylester von Vinylsäuren, insbesondere Glycidylacrylat und Glycidylmethacrylat, erhältlich.

Weitere Beispiele sind Polyglycidyl- und Poly-(β-methylglycidyl)-äther, die durch Umsetzung einer mindestens zwei freie alkoholische und/oder phenolische Hydroxylgruppe pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich mit Polyepichlorhydrin aus acyclischen Alkoholen wie Aethylenglykol, Diäthylenglykol und höheren Poly(oxyäthylen)-glykolen, Propan-1,2-diol und Poly-(oxypropylen)-glykolen, Propan-1,3-diol, Poly-(oxytetramethylen)-glykolen, Pentan-1,5-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3 und aus Alkoholen mit aromatischen Kernen, wie N,N-Bis-(2-hydroxyäthyl)-anilin und p,p'-Bis-(2-hydroxyäthylamino)-diphenylmethan, herstellen. Man kann sie ferner aus einkernigen Phenolen wie Resorcin und Hydrochinon und mehrkernigen Phenolen wie Bis-(4-hydroxyphenyl)-methan (sonst als Bis-phenol F bekannt), 4,4'-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden wie Formaldehyd, Acetaldehyd, Chloral und Furfurol mit Phenol selbst und durch Chloratome oder Alkylgruppen mit jeweils bis zu neun Kohlenstoffatomen ringsubstituiertem Phenol wie 4-Chlorphenol, 2-Methylphenol und 4-tert.-Butylphenol gebildeten Novolaken erhalten.

Ebenfalls kommen Epoxidharze mit an verschiedene Arten von Sauerstoffatomen gebundenen 2,3-Epoxipropylgruppen in Betracht, z. B. Glycidyl-2-(glycidyloxy)-benzoat und das Diglycidylderivat des Phenolphthaleins.

Gewünschtenfalls kann man ein Gemisch von Epoxidharzen verwenden.

Besonders bevorzugte, erfindungsgemäss verwendete Epoxidharze sind gegebenenfalls vorverlängerte Diglycidyläther zweiwertiger Phenole wie 2,2-Bis-(4-hydroxyphenyl)-propan und Bis-(4-hydroxyphenyl)-methan sowie zweiwertiger Alkohole wie Butan-1,4-diol.

Gewünschtenfalls kann man das Epoxidharz einer Mischhärtung mit einem mehrwertigen Alkohol, d. h. einer Verbindung mit mindestens zwei alkoholischen, vorzugsweise primären Hydroxylgruppen in Molekül, unterwerfen. Vorzugsweise liegt der mehrwertige Alkohol in einer solchen Menge vor, dass 0,5 bis 1,5, insbesondere 0,75 bis 1,25, alkoholische Hydroxylgruppen auf eine 1,2-Epoxidgruppe des Epoxidharzes kommen. Bevorzugt enthält der mehrwertige Alkohol neben den alkoholischen Hydroxylgruppen nur Kohlenstoff, Wasserstoff sowie gegebenenfalls als Aethersauerstoff oder Acetal- oder Carbonylgruppen vorliegenden Sauerstoff und Halogenatome. Ferner soll der mehrwertige Alkohol vorzugsweise ein Molekulargewicht von mindestens 100 und insbesondere über 1 000 aufweisen. Als mehrwertige Alkohole eignen sich beispielsweise Poly-(oxyäthylen)-glykole, Poly-(oxypropylen)-glykole, Poly-(oxytetramethylen)-glykole, Polyepichlorhydrine, Poly-(oxyäthylen)-, Poly-(oxypropylen)- und Poly-(oxytetramethylen)-triole, die durch Polymerisation von Aethylenoxyd, Propylenoxyd oder Tetrahydrofuran in Gegenwart von Glycerin oder 1,1,1-Trimethylolpropan erhältlich sind, Polycaprolactone mit Hydroxylendgruppen, Copolymere des Styrols mit Allylalkohol, Polyvinylalkohole, Hydroxypropylcellulose, hydroxylhaltige Polyvinylacetale sowie Teilester der Cellulose z. B. ein Cellulose-acetatbutyrat.

Zur Verwendung als organisches Oxydationsmittel geeignete Chinone umfassen z. B. Chloranil, 2,3-Dichlor-5,6-dicyanbenzochinon und Tetracyanchinodimethan.

Als organisches Oxydationsmittel verwendbare Peroxyde kommen u. a. beispielsweise Benzoylperoxyd, p-Chlorbenzoylperoxyd, Cumylperoxyd, Lauroylperoxyd, Cumolhydroperoxyd, Cyclohexanonperoxyd, Aethylmethylketonperoxyd, Diisopropyl-peroxydicarbonat, Di-tert.-butylperphthalat, tert.-Butylperacetat und tert.-Butylhydroperoxyd in Frage. Das Peroxyd kann man zusammen mit einem tertiären Amin z. B. Dimethylanilin oder einer Uebergangsmetallverbindung, insbesondere einem Carboxylat wie einem Kobaltsikkativ (z. B. Kobaltnaphthenat), Kobaltstearat, Zinkoctanoat, Eisenoctanoat, Zinn-(II)-octanoat oder Kupfernaphthenat, als Beschleuniger einsetzen.

Beispiele für als organisches Oxydationsmittel geeignete aromatische Jodosoverbindungen sind u. a. Jodosobenzol, Jodosobenzol-diacetat, Jodosobenzol-bis-(trifluoracetat), 4-Nitrojodosobenzol und 4-Chlorjodosobenzol-diacetat.

Wie schon angegeben entspricht der eingesetzte Anteil des Gemischs aus aromatischem Sulfoxoniumsalz und organischem Oxydationsmittel im Verhältnis zu dem der Komponente (a) der für deren Heisspolymerisation wirksamen Menge. Der Anteil ist von der Art des Sulfoxoniumsalzes, des organischen Oxydationsmittels und der speziellen, als zu polymerisierende oder zu härtende Komponente (a) vorliegenden Verbindung bzw. Verbindungen sowie von der Gegenwart oder Abwesenheit von Beschleunigern wie tertiären Aminen oder Uebergangsmetallverbindungen, falls das organische Oxydationsmittel ein Peroxyd ist, abhängig. Der Fachmann in der Heisspolymerisationstechnik kann ohne weiteres die geeigneten Mengenverhältnisse feststellen. Ueblicherweise verwendet man 1 bis 15, vorzugsweise 2 bis 12,5 Gewichtsteile des Gemischs (b) auf 100 Gewichtsteile Komponente (a). Im allgemeinen wird man 1 teil aromatisches Sulfoxoniumsalz mit 1 bis 3 Gewichtsteilen organischem Oxydationsmittel einsetzen.

Das aromatische Sulfoxoniumsalz und das organische Oxydationsmittel lassen sich leicht durch Vermahlen in der Komponente (a) dispergieren, oder man kann auch das Sulfoxoniumsalz und das Oxydationsmittel mit $\gamma$-Butyrolacton (einem Lösungsmittel für das Sulfoxoniumsalz) zu einer Paste anrühren und dann mit der Komponente (a) vermischen.

Die Temperaturen, auf welche die Massen zu erhitzen sind, und die Erhitzungsdauer für weitgehend vollständige Umsetzung zur polymerisierten (oder gehärteten) Form lassen sich leicht durch Serienversuche ermitteln ; als typische Beispiele erhitzt man die Masse 1 bis 30 Minuten, üblicherweise 1 bis 12 Minuten, auf eine Temperatur im Bereich von 75 °C bis 200 °C, insbesondere 90° bis 170 °C.

Die neuen Massen können ferner Zusatzstoffe wie Füllstoffe, Verstärkungsstoffe, Farbmittel, Verlaufmittel, flammhemmende Stoffe und Entformungsmittel enthalten. Als Streckmittel, Füllstoffe und Verstärkungsstoffe eignen sich beispielsweise Glasfasern, Kohlenstofffasern, Glaskügelchen, Glimmer, Quarzpulver, Calciumcarbonat, Cellulose, Kaolin, Wollastonit, kolloide Kieselsäure mit grosser spezifischer Oberfläche, gepulvertes Polyvinylchlorid sowie gepulverte Polyolefinkohlenwasserstoffe wie Polyäthylen und Polypropylen.

Die erfindungsgemässen härtbaren Massen sind als Laminierharze, Anstrichmittel und Lacke, Tränk- und Giessharze, Einbettungs- und Isoliermassen für die Elektroindustrie und als Klebstoffe sowie bei der Herstellung solcher Produkte verwendbar.

Die nachfolgenden Beispiele erläutern die Erfindung, wobei Teile und Prozentangaben stets Gewichtsteile und Gewichtsprozente sind. Wie auf diesem Gebiet üblich wird die Beschleunigungswirkung als die Verkürzung der zur Gelierung der Masse vor der Härtung erforderlichen Zeit angegeben ; die Gelierungszeiten werden mittels eines « Techne »-Gelierungszeitmessgeräts der Firma Techne (Cambridge) Limited, Duxford, Cambridge, England, bestimmt.

Als « Epoxidharz I » wird ein Diglycidyläther des 2,2-Bis-(4-hydroxyphenyl)-propans mit einem 1,2-Epoxidgehalt von 5,16 val/kg bezeichnet.

Als « Epoxidharz II » wird ein Diglycidyläther des Bis-(4-hydroxycyclohexyl)-methans mit einem 1,2-Epoxidgehalt von 4,3 val/kg bezeichnet.

Als « Epoxidharz III » wird eine Diglycidylhexahydrophthalat mit 6,5 val/kg 1,2-Epoxidgehalt bezeichnet.

Die in den Beispielen verwendeten Sulfoxoniumsalze werden wie folgt hergestellt :

Dimethylphenacylsulfoxonium-hexafluorophosphat

In einer Stickstoffatmosphäre tropft man Benzoylchlorid (11,4 Teile) im Verlauf von 10 Minuten zu 300 Teilen einer 0,4-m-Lösung von Dimethylsulfoxonium-methylid in Tetrahydrofuran. Man rührt 1,5 Stunden lang und perlt dann Chlorwasserstoffgas durch die Lösung, bis sich kein Niederschlag mehr bildet. Nach Abfiltrieren und Trocknen des Niederschlags im Vakuum verbleiben 27,5 Teile weisses Pulver, das aus Dimethylphenacylsulfoxonium-chlorid im Gemisch mit Trimethylsulfoxonium-chlorid besteht.

Das erhaltene Gemisch (27,5 Teile) löst man in 150 Teilen Wasser und versetzt unter Rühren mit einer Lösung von 40 Teilen Kaliumhexafluorophosphat in 150 Teilen Wasser. Nach 30 Minuten wird der ausgefallene Feststoff abfiltriert, mit Wasser gewaschen und im Vakuum bei 50°-60 °C getrocknet.

Eine Probe (6 Teile) getrockneten Feststoffs extrahiert man mit 20 Teilen Aceton. Beim Eindampfen des Acetons verbleiben 4 Teile des gewünschten Dimethylphenacylsulfoxonium-hexafluorophosphats (III, Ar = $C_6H_5$, $R^3 = COCH_2$ $R^4$ = $R^5$ = $CH_3$, $MX_t^-$ = $PF_6^-$, g = 1) als schwachgelber Feststoff vom Schmelzpunkt 161°-3 °C, der weitgehend frei von Trimethylsulfoxoniumsalz ist. Beim Umkristallisieren aus Methanol erhält man farblose Platten vom Schmelzpunkt 171 °C. NMR (Aceton-$d_6$), 4,15 (s-6H), 6,10 (s-2H) und 7,95 (m-5H) ; IR (KBr-Scheibe) 3 020, 2 960, 2 920, 1 675, 1 590, 1 330, 1 310, 1 230, 1 190, 1 035, 980 und 840 $cm^{-1}$ ; UV (Aethanol) $\lambda_{max}$ = 254 nm.

Dimethylphenacylsulfoxonium-hexafluorophosphat erhält man auch dadurch, dass man das Benzoylchlorid wie oben zur Lösung des Dimethylsulfoxonium-methylids gibt, dann im Verlauf von 20 Minuten 45 Teile des Hexafluorophosphorsäure/Diaethylätherkomplexes dazutropft, noch 1 1/2 Stunden rührt, den Niederschlag abfiltriert und im Vakuum trocknet (wobei man 47 Teiles eines Gemischs aus Trimethylsulfoxonium-hexafluorophosphat und Dimethylsulfoxoniumhexafluorophosphat erhält) und dann die gewünschte Phenacylverbindung wie oben in Aceton extrahiert.

Acetanilinodimethylsulfoxonium-hexafluorophosphat

Man löst gemäss König und Metzger, Chem. Ber., 1965, *98*, 3740, hergestelltes Dimethyl-N-phenylcarbamoyloxosulfonium-ylid (10,5 Teile) in 110 Teilen 0,5-m-Salzsäure. Dazu gibt man unter Rühren eine Lösung von 9,5 Teilen Kalium-hexafluorophosphat in Wasser. Der ausgeschiedene weisse Feststoff wird abfiltriert, mit Wasser gewaschen und aus Aethanol umkristallisiert, wobei man 8 Teile des gewünschten Produkts (III, Ar = $C_6H_5$, $R^3$ = $NHCOCH_2$, $R^4$ = $R^5$ = $CH_3$, $MX_t^-$ = $PF_6^-$, g = 1) erhält, Schmelzpunkt 141°-5 °C ; NMR (Aceton-$d_6$) 4,17 (s-6H), 5,41 (s-2H) 7,1-7,6 (m-5H) und 9,90 (s-1H) ; IR (KBr-Scheibe) 3 310, 3 030, 3 015, 3 000, 2 960, 2 880, 1 665, 1 600, 1 560, 1 490, 1 440, 1 340, 1 240, 1 030, 950, 840 und 760 $cm^{-1}$ ; UV (Aethanol) $\lambda_{max}$ 269 nm.

Acetanilinodimethylsulfoxonium-hexafluoroarsenat

Dies wird auf die gleiche Weise hergestellt, unter Ersatz des Hexafluorophosphats durch eine äquivalente Menge Kalium-hexafluoroarsenat.

Acetanilinodimethylsulfoxonium-tetrafluoroborat

Dies wird auf die gleiche Weise hergestellt, unter Einsatz einer äquivalenten Menge Natriumtetrafluoroborat.

p-Methylacetanilinodimethylsulfoxonium-hexafluorophosphat

Man verrührt analog hergestelltes Dimethyl-N-(p-tolyl)-carbamoyloxosulfonium-ylid (22,5 Teile) mit 200 Teilen 0,5-m-Salzsäure und versetzt unter Rühren mit einer Lösung von 37 Teilen Kalium-hexafluorophosphat in Wasser. Nach 30 Minuten wird der Niederschlag abfiltriert, mit Wasser gewaschen und getrocknet ; man erhält 60 Teile des gewünschten Produkts (III, Ar = p-$CH_3C_6H_4$, $R^3$ = $NHCOCH_2$, $R^4$ = $R_5$ = $CH_3$, $MX_t^-$ = $PF_6^-$, g = 1) vom Schmelzpunkt 131-3 °C ; NMR (Aceton-$d_6$) 4,17 (s-6H), 5,43 (s-2H), 7,3-7,8 (m-4H) und 10,05 (s-1H) ; IR (KBr-Scheibe) 3 260, 3 040, 2 980, 2 930, 1 660, 1 540, 1 490, 1 400, 1 320, 1 240, 1 090, 1 040 und 840 $cm^-$ ; UV (Aethanol) $\lambda_{max}$ 273 nm.

p-Chloracetanilinodimethylsulfoxonium-hexafluorophosphat

Man verrührt analog hergestelltes Dimethyl-N-(p-chlorphenyl)-carbamoyloxosulfonium-ylid (49 Teile) mit 400 Teilen 0,5-m-Salzsäure und versetzt unter Rühren mit einer Lösung von 37 Teilen Kalium-hexafluorophosphat in Wasser. Nach 30 Minuten wird der Niederschlag abfiltriert, mit Wasser gewaschen und getrocknet ; man erhält 60 Teile des gewünschten Produkts (III, Ar = p-$ClC_6H_4$, $R^3$ = $NHCOCH_2$, $R^4$ = $R^5$ = $CH_3$, g = 1, $MX_t$ = $PF_6^-$) vom Schmelzpunkt 161-3 °C ; NMR (Aceton-$d_6$) 4,17 (s-6H), 5,43 (s-2H), 7,3-7,8 (m-4H) und 10,05 (s-1H) ; IR (Kbr-Scheibe) 3 260, 3 040, 2 980, 2 930, 1 660, 1 540, 1 490, 1 400, 1 320, 1 240, 1 090, 1 040 und 840 $cm^{-1}$ ; UV (Aethanol) $\lambda_{max}$ 273 nm.

3,4-Dichloracetanilinodimethylsulfoxonium-hexafluoroarsenat

Man verrührt analog hergestelltes Dimethyl-N-(3,4-dichlorphenyl)-carbamoyloxosulfonium-ylid (56 Teile) mit 400 Teilen 0,5-m-Salzsäure und versetzt unter Rühren mit einer Lösung von 46 Teilen Kalium-hexafluoroarsenat in 250 Teilen Wasser. Nach 30 Minuten wird der Feststoff abfiltriert, mit Wasser gewaschen und aus Aethanol umkristallisiert. So erhält man 27 Teile gewünschtes Produkt (III, Ar = 3,4-$Cl_2C_6H_3$, $R^3$ = $NHCOCH_2$, $R^4$ = $R^5$ = $CH_3$, g = 1, $MX_t^-$ = $AsF_6^-$) vom Schmelzpunkt 125°-9 °C ; NMR (Aceton-$d_6$) 4,22 (s-6H), 5,50 (s-2H), 7,50 (m-2H), 8,03 (m-1H), 10,50 (s-1H) ; IR (KBr-Scheibe) 3 650, 3 535, 3 100, 3 020, 2 970, 2 930, 2 850, 1 675, 1 605, 1 530, 1 470, 1 380, 1 330, 1 220, 1 170, 1 050 und 710 $cm^{-1}$ ; UV (Aethanol) $\lambda_{max}$ 275 nm.

Benzoylcarbamoyldimethylsulfoxonium-hexafluorophosphat

Man verrührt nach Tsuge u. a., Tetrahedron, 1973, *29*, 1983, hergestelltes Dimethylsulfoxoniumbenzoylcarbamoylmethylid (4,8 Teile) mit 50 Teilen 0,5-m-Salzsäure und versetzt dann mit einer Lösung von 3,7 Teilen Kalium-hexafluorophosphat in Wasser. Der weisse Feststoff wird abfiltriert, mit Wasser gewaschen und im Vakuum getrocknet, wobei man 7 Teile gewünschtes Produkt (III, Ar = $C_6H_5$, $R^3$ = $CONHCOCH_2$, $R^4$ = $R^5$ = $CH_3$, g = 1, $MX_t^-$ = $PF_6^-$) erhält ; NMR (Aceton-$d_6$) 4,19 (s-6H), 6,02 (s-6H), 6,02 (s-2H), 7,5-8,2 (m-5H) und 9,95 (s-1H) ; IR (KBr-Scheibe) 3 320, 1 710, 1 680, 1 460, 1 360, 1 320, 1 240, 1 170, 1 040, 840 und 710 $cm^{-1}$ ; UV (Aethanol $\lambda_{max}$ 274 nm.

Weitere in den erfindungsgemässen Massen verwendbare aromatische Sulfoxoniumsalze lassen sich wie folgt herstellen :

Dimethylphenacylsulfoxonium-hexafluoroantimonat

Eine weitere Probe (5 Teile) des aus Benzoylchlorid und Dimethylsulfoxonium-methylid hergestellten Gemischs aus Dimethylphenacylsulfoxonium-chlorid und Trimethylsulfoxonium-chlorid löst man in 50 Teilen Wasser und versetzt unter Rühren mit 6,7 Teilen Natrium-hexafluoroantimonat. Nach 30 Minuten wird der ausgefallene Feststoff abfiltriert, mit Wasser gewaschen und im Vakuum getrocknet. So erhält man 8 Teile eines Gemischs aus Dimethylphenacylsulfoxonium-hexafluoroantimonat (III, Ar = $C_6H_5$, $R^3$ = $COCH_2$, $R^4$ = $R^5$ = $CH_3$, g = 1, $MX_t^-$ = $SbF_6^-$) und Trimethylsulfoxonium-hexafluoroantimonat. Ersteres lässt sich durch Umkristallisieren aus Methanol abtrennen.

1,4-Bis-(1-oxo-2-(dimethylsulfoxonium)-äthyl)-benzol-dihexafluoroarsenat

In einer Stickstoffatmosphäre tropft man in 18 Teilen Tetrahydrofuran gelöstes Terephthaloylchlorid (8,5 Teile) im Verlauf von 30 Minuten zu 300 Teilen einer 0,4-m-Lösung von Dimethylsulfoxonium-methylid in Tetrahydrofuran. Nach 1,5 Stunden Rühren des Gemischs wird Chlorwasserstoffgas hindurchgeperlt, bis sich kein Niederschlag mehr bildet. Dann wird das Gemisch noch eine Stunde gerührt und der Feststoff abfiltriert und im Vakuum getrocknet.

Eine Probe dieses Feststoffs (5 Teile) rührt man mit 50 Teilen Wasser und versetzt mit einer Lösung von Kalium-hexafluoroarsenat (15 Teile) in 100 Teilen Wasser.Nach 30 Minuten Rühren wird der Feststoff abfiltriert und anschliessend mehrmals aus Methanol umkristallisiert. Dabei erhält man das gewünschte Produkt (III, Ar = $C_6H_4$, $R^3$ = $COCH_2$, $R^4$ = $R^5$ = $CH_3$, g = 2, $MX_t^-$ = $AsF_6^-$), weitgehend frei von Trimethylsulfoxonium-hexafluoroarsenat, als schwachgelbe Kristalle vom Schmelzpunkt 188°-90 °C ; NMR (Aceton-$d_6$) 4,20 (s-12H), 6,30 (s-4H), 8,32 (s-4H), IR (KBr-Scheibe) 3 020, 2 930, 1 685, 1 405, 1 310, 1 235, 1 035, 980, 950 und 700 $cm^{-1}$ ; UV (Aethanol) $\lambda_{max}$ = 311 nm.

1,4-Bis-(1-oxo-2-(dimethylsulfoxonium)-äthyl)-benzol-dihexafluoroantimonat

Eine weitere Probe (5 Teile) des Gemischs aus 1,4-Bis-(1-oxo-2-(dimethylsulfoxonium)-äthyl)-benzoldichlorid und Trimethylsulfoxonium-chlorid verrührt man mit 100 Teilen Wasser und versetzt diese Suspension portionsweise mit 18 Teilen Kalium-hexafluoroantimonat. Nach weiteren 30 Minuten Rühren wird das so erhaltene Gemisch aus 1,4-Bis-(1-oxo-2-(dimethylsulfoxonium)-äthyl)-benzol-dihexafluoroantimonat (III, Ar = $C_6H_4$, $R^3$ = $COCH_2$, $R^4$ = $R^5$ = $CH_3$, g = 2, $MX_t^-$ = $SbF_6^-$) und Trimethylsulfoxonium-hexafluoroantimonat abfiltriert und im Vakuum getrocknet. Das gewünschte Salz lässt sich durch Umkristallisieren aus Methanol vom Trimethylsulfoxoniumsalz abtrennen.

Diphenylphenacylsulfoxonium-hexafluorophosphat

Diphenylsulfoxonium-phenacylid wird durch Umsetzung von α-Diazoacetophenon mit Diphenylsulfoxyd in Gegenwart von Kupferacetylacetonat hergestellt, wie von Takebayashi u. a. (Chemistry Letters, 1973, 809) beschrieben. Man leitet Chlorwasserstoffgas durch eine Lösung dieses Ylids in Toluol, bis sich kein Niederschlag mehr bildet. Dieser Niederschlag wird abfiltriert, im Vakuum getrocknet und dann in Wasser aufgelöst. Eine äquimolare Menge einer wässrigen Kalium-hexafluorophosphatlösung wird

dazugegeben, und nach 15 Minuten Rühren wird das ausgefallene Diphenylphenacylsulfoxonium-hexafluorophosphat (III, Ar = $C_6H_5$, $R^3$ = $COCH_2$, $R^4$ = $R^5$ = $C_6H_5$, g = 1, $MX_t^-$ = $PF_6^-$) abgetrennt und im Vakuum getrocknet.

2,4-Bis-(dimethylsulfoxonium-methylcarbamoyl)-toluol-dihexafluorophosphat

Man verrührt durch Umsetzung von Toluol-2,4-diisocyanat mit 2 Molanteilen Dimethylsulfoxonium-methylid nach der Methode von König und Metzger (a. a. O) hergestelltes Bis-(dimethyloxosulfurylen-ylid) (3,6 Teile) mit 40 Teilen 0,5-m-Salzsäure. Man versetzt mit in Wasser gelöstem Kalium-hexafluorophosphat (3,7 Teile) und rührt 15 Minuten. Der Feststoff wird abfiltriert, mit Wasser gewaschen und im Vakuum getrocknet ; dabei erhält man 5 Teile gewünschtes Produkt (III, Ar = 2,4-$C_6H_3(CH_3)$, $R^3$ = $NHCOCH_2$, $R^4$ = $R^5$ = $CH_3$, g = 2, $MX_t^-$ = $PF_6^-$).

Beispiel 1

Man vermischt Dimethylphenacylsulfoxonium-hexafluorophosphat (0,2 g) mit 0,2 g γ-Butyrolacton zu einer Paste und dispergiert in 15 g Epoxidharz I und erhitzt dann 30 Stunden bei 150 °C. Die Masse geliert dabei nicht.

Eine grössere Menge, nämlich 0,45 g, desselben Sulfoxoniumsalzes vermischt man mit 0,9 g γ-Butyrolacton und erhitzt mit 15 g Epoxidharz I in Gegenwart von 0,45 g Azobis-(isobutyronitril) bei 100 °C. Bei Abbruch des Versuchs 18 Stunden später ist die Masse immer noch nicht geliert. (Azobis-(isobutyronitril) ist in WO/01723 als geeignetes Oxydationsmittel angegeben.)

In drei weiteren Versuchen vermischt man jeweils 0,45 g desselben Sulfoxoniumsalzes mit 0,9 g γ-Butyrolacton, 15 g Epoxidharz I und mit 0,9 g Jodosobenzol-diacetat, 0,45 g 2,6-Dichlor-5,6-dicyanbenzochinon bzw. 0,45 g Tetracyanchinodimethan und erhitzt bei 120 °C. Die Gelierungszeiten sind 6 Minuten, 4 Minuten bzw. 22 Minuten.

Beispiel 2

Man vermischt Dimethylphenacylsulfoxonium-hexafluorophosphat (0,45 g) und entweder Benzoylperoxyd (0,45 g) oder Chloranil (0,45) mit 0,9 g γ-Butyrolacton zu einer Paste und erhitzt mit 15 g Epoxidharz I bei 160 °C. Die Gelierungszeiten sind 1 Minute bzw. 11 Minuten. In einem anderen Versuch wird eine weitere Probe des Benzoylperoxyd enthaltenden Gemischs bei 100 °C erhitzt ; die Gelierungszeit ist dabei 18 Minuten.

Beispiel 3

Man erhitzt Acetanilinodimethylsulfoxonium-hexafluorophosphat (0,45 g), γ-Butyrolacton (0,9 g) und 15 g Epoxidharz I bei 120 °C ; bei Beendigung des Versuchs nach 30 Stunden Erhitzen ist das Gemisch nicht geliert. Der Versuch wird wiederholt, wobei das Gemisch ferner 0,45 g 2,3-Dichlor-5,6-dicyanbenzochinon enthält ; die Gelierungszeit bei 120 °C ist 4 Minuten.

Beispiel 4

p-Methylacetanilinodimethylsulfoxonium-hexafluorophosphat (0,3 g) vermischt man mit 0,3 g γ-Butyrolacton und dann mit 15 g Epoxidharz I und erhitzt die Masse 30 Stunden bei 150 °C. Die Masse geliert dabei nicht. In einem weiteren Versuch vermischt man 0,24 g desselben Sulfoxoniumsalzes und 0,48 g γ-Butyrolacton mit 15 g Epoxidharz I und 0,24 g 2,3-Dichlor-5,6-dicyanbenzochinon und erhitzt bei 160 °C. Die Masse geliert innerhalb 5 Minuten.

Beispiel 5

Aus Acetanilinodimethylsulfoxonium-hexafluoroarsenat (0,45 g) und 2,3-Dichlor-5,6-dicyanbenzochinon (0,45 g) stellt man mit 0,9 g γ-Butyrolacton eine Paste her und erhitzt mit 15 g Epoxidharz I bei 120 °C ; das Harz geliert innerhalb 5 Minuten. Der Versuch wird wiederholt, unter Weglassung des Chinons ; bei Abbruch des Versuchs nach 2 Stunden Erhitzen ist keine Gelierung eingetreten.

Beispiel 6

Man stellt die folgenden Massen her und erhitzt bei 160 °C (Massen « a » und « b ») bzw. bei 120 °C (Massen « c » und « d »).

(Siehe Tabelle Seite 11 f.)

| | Gewicht (g) | | | |
|---|---|---|---|---|
| | a | b | c | d |
| 3,4-Dichloracetanilinodimethylsulfoxonium-hexafluoroarsenat | 0,45 | 0,45 | 0,45 | 0,45 |
| γ-Butyrolacton | 0,45 | 0,9 | 0,9 | 0,9 |
| Chloranil | — | 0,45 | — | — |
| 2,3-Dichlor-5,6-dicyanbenzochinon | — | — | 0,45 | — |
| Benzoylperoxyd | — | — | — | 0,45 |
| Epoxidharz I | 33 | 15 | 15 | 15 |
| Gelierungszeiten (Minuten) | 430 | 8 | 5 | 8 |

Die viel kürzeren Gelierungszeiten der Massen « b », « c » und « d » gegenüber Masse « a » (einer nicht erfindungsgemässen Masse) sind besonders bemerkenswert, umso mehr als zwei von diesen bei nur 120 °C anstatt 160 °C erhitzt wurden.

Beispiel 7

Die folgenden Massen werden bei 150 °C erhitzt und ihre Gelierungszeiten aufgezeichnet :

| | Gewicht (g) | |
|---|---|---|
| | e | f |
| p-Chloracetanilinodimethylsulfoxonium-hexafluorophosphat | 0,3 | 0,3 |
| γ-Butyrolacton | 0,6 | 0,6 |
| Benzoylperoxyd | — | 0,3 |
| Epoxidharz I | 15 | 15 |
| Gelierungszeit (Minuten) | — | 12 |

Die zum Vergleich eingeschlossene Masse « e » ist am Ende des Versuchs nach 40 Stunden nicht geliert. Die Beschleunigungswirkung des Oxydationsmittels (erfindungsgemässe Masse « f ») zeigt sich deutlich.

Beispiel 8

Aus Benzoylcarbamoyldimethylsulfoxonium-hexafluorophosphat (0,45 g) stellt man mit γ-Butyrolacton eine Paste her, vermisch mit 15 g Epoxidharz I und erhitzt bei 120 °C ; der Versuch wird nach 30 Stunden abgebrochen, zu welcher Zeit Gelierung nicht eingetreten ist. Der Versuch wird mit zusätzlich 0,45 g 2,3-Dichlor-5,6-dicyanbenzochinon wiederholt ; die Gelierungszeit beträgt nur 12 Minuten.

Beispiel 9

Man löst Acetanilinodimethylsulfoxonium-hexafluorophosphat (0,9 g) im gleichen Gewicht γ-Butyrolacton und vermischt mit 15 g Epoxidharz II. Das Gemisch wird auf 120 °C erhitzt. Ein weiches Gel bildet sich erst bei 4 Stunden langem Erhitzen.

Der Versuch wird wiederholt, wobei das Gemisch zusätzlich 0,45 g Benzoylperoxyd enthält. Die Gelierungszeit beträgt 30 Minuten.

Beispiel 10

Man vermischt Epoxidharz III (15 g) mit in 0,9 g γ-Butyrolacton gelöstem Acetanilinodimethylsulfoxoniumhexafluorophosphat und mit 0,9 g Benzoylperoxyd und erhitzt dann bei 110 °C. Ein weiches Gel bildet sich nach 1 Stunde.

Bei Wiederholung des Versuchs ohne Benzoylperoxyd ist das Gemisch bei Abbruch des Versuchs nach 5 Stunden Erhitzen nicht einmal dick geworden.

Zu Vergleichszwecken vermischt man Epoxidharz III (15 g) mit 0,45 g 2,3-Dichlor-5,6-dicyanbenzchinon, 0,9 g γ-Butyrolacton und 0,45 g eines aliphatischen Sulfoxoniumsalzes, nämlich Trimethylsulfononium-hexafluorophosphat, und erhitzt bei 120 °C. Bei Abbruch des Versuchs nach 2 Stunden Erhitzen ist das Gemisch nicht geliert.

Beispiel 11

Beim Erhitzen bei 120 °C geliert ein Gemisch aus 15 g Epoxidharz I, 0,7 g Acetanilinodimethylsulfoxoniumhexafluorophosphat und 0,63 g Cumolhydroperoxyd nach 70 Minuten Erhitzen. Wiederholt man den Versuch zum Vergleich mit einem anorganischen Oxydationsmittel, nämlich Ammoniumpersulfat (0,45 g), das mit 0,9 g γ-Butyrolacton zu einer Paste verrührt ist, anstelle des Cumolhydroperoxyds, so ist das Gemisch bei Abbruch des Versuchs nach 3 Stunden Erhitzen bei 120 °C nicht geliert. In einem weiteren Versuch verwendet man zum Vergleich ein anderes anorganisches Oxydationsmittel, nämlich Kaliumpermanganat (0,3 g), das mit 0,9 g γ-Butyrolacton zu einer Paste verrührt ist, anstelle von Cumolhydroperoxyd ; nach 3 Stunden Erhitzen des Gemischs bei 120 °C ohne Gelierung wird der Versuch abgebrochen.

Beispiel 12

Ein Gemisch aus 15 g Epoxidharz I, 0,45 g mit 0,45 g γ-Butyrolacton zu einer Paste verrührtem Acetanilinodimethylsulfoxonium-tetrafluoroborat und 0,45 g 2,3-Dichlor-5,6-dicyanbenzochinon geliert beim Erhitzen bei 120 °C innerhalb 5 Minuten. Ein ähnliches Gemisch ohne das Chinon wird bei 120 °C erhitzt ; das Gemisch ist nach 4 Stunden nicht geliert.

**Ansprüche**

1. Heisspolymerisierbare Massen, dadurch gekennzeichnet, dass sie aus (a) einer mindestens eine direkt an ein Sauerstoffatom gebundene 2,3-Epoxipropylgruppe enthaltenden Verbindung und (b) einer heisspolymerisierenden Menge eines Gemischs aus (i) einem aromatischen Sulfoxoniumsalz der Formel

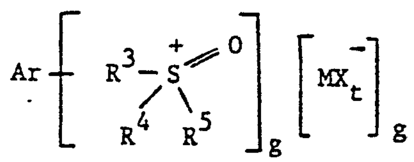

(III)

worin Ar für eine g-wertige aromatische Gruppe mit 4 bis 25 kohlenstoffatomen, $R^3$ für eine Gruppe der Formel $—COCH_2—$, $—NHCOCH_2—$ oder $—CONHCOCH_2—$ und $R^4$ für eine Alkylgruppe mit 1 bis 18 Kohlenstoffatomen, eine Alkenylgruppe mit 2 bis 6 Kohlenstoffatomen, eine Cycloalkylgruppe mit 3 bis 8 Kohlenstoffatomen, eine Cycloalkylalkylgruppe mit 4 bis 10 Kohlenstoffatomen, eine Arylgruppe mit 4 bis 25 Kohlenstoffatomen oder eine Aralkylgruppe mit 5 bis 16 Kohlenstoffatomen stehen, $R^5$ dieselbe Bedeutung wie $R^4$ hat, aber auch eine Dialkylaminogruppe mit 2 bis 8 Kohlenstoffatomen oder, falls $R^4$ eine Alkylgruppe wie oben bedeutet, eine Arylaminogruppe mit 4 bis 8 Kohlenstoffatomen darstellen kann, M für ein Metall- oder Metalloidatom steht, t 4, 5 oder 6 und eins grösser als die Wertigkeit von M ist, X für ein Halogenatom steht, mit der Massgabe, dass ein X eine Hydroxogruppe bedeuten kann, wenn M Antimon, t 6 und die übrigen fünf X je ein Fluoratom darstellen, und g 1 oder 2 ist, und (ii) einem unter Chinonen, Peroxyden und aromatischen Jodosoverbindungen ausgewählten organischen Oxydationsmittel bestehen.

2. Massen nach Anspruch 1, dadurch gekennzeichnet, dass Ar für eine Phenyl-, Naphthyl-, Phenylen- oder Naphthylengruppe oder eine Gruppe der Formel

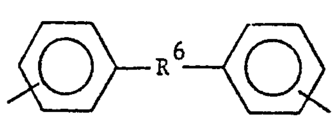

(IV)

steht, worin $R^6$ eine Kohlenstoff-Kohlenstoffbindung, ein Aethersauerstoffatom, ein Schwefelatom oder einen Rest der Formel $—CH_2—$, $—C(CH_3)_2—$ oder $—SO_2—$ darstellt, wobei diese Gruppen gegebenenfalls in dem bzw. den Ring(en) durch eine oder zwei Alkyl- oder Alkoxygruppen mit jeweils 1 bis 4 Kohlenstoffatomen, eine oder zwei Nitrogruppen oder ein oder zwei Chlor-, Brom- oder Fluoratome substituiert sein können.

3. Massen nach Anspruch 1, dadurch gekennzeichnet, dass $R^4$ und $R^5$ beide für eine Alkylgruppe mit höchstens 12 Kohlenstoffatomen oder eine Phenyl- oder Naphthylgruppe stehen, die gegebenenfalls in dem bzw. den Ring(en) durch eine oder zwei Alkyl- oder Alkoxygruppen mit jeweils 1 bis 4 Kohlenstoffatomen oder ein oder zwei Fluor-, Chlor- oder Bromatome substituiert sein kann.

4. Massen nach Anspruch 1, dadurch gekennzeichnet, dass $MX_t^-$ für Tetrafluoroborat, Hexachlorowismutat, Hydroxopentafluoroantimonat, Hexafluorophosphat, Hexafluoroantimonat oder Hexafluoroarsenat steht.

5. Massen nach Anspruch 1, dadurch gekennzeichnet, dass (a) mehr als eine direkt an ein Sauerstoffatom gebundene 2,3-Epoxipropylgruppe pro Durchschnittsmolekül enthält.

6. Massen nach Anspruch 5, dadurch gekennzeichnet, dass als (a) ein gegebenenfalls vorverlängerter Diglycidyläther eines zweiwertigen Phenols oder zweiwertigen Alkohols vorliegt.

7. Massen nach einem der vorhergehenden Ansprüche, dadurch gekennzeichnet, dass sie 1 bis 15 Gewichtsteile Gemisch (b) auf 100 Gewichtsteile (a) enthalten.

8. Massen nach einem der vorhergehenden Ansprüche, dadurch gekennzeichnet, dass das Gemisch (b) aus 1 bis 3 Gewichtsteilen organischem Oxydationsmittel (ii) pro Gewichtsteil aromatischem Sulfoxoniumsalz (i) besteht.

9. Verwendung der Massen gemäss Anspruch 1 zur Herstellung von Ueberzügen, Verklebungen oder Formstoffen.

**Claims**

1. A heat-polymerisable composition which comprises (a) a compound containing at least one 2,3-epoxypropyl group linked direct to an oxygen atom and (b) a heat-polymerising amount of a mixture of (i) an aromatic sulfoxonium salt of formula

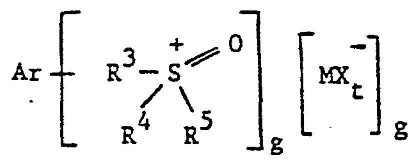

(III)

wherein Ar is a g-valent aromatic group of 4 to 25 carbon atoms, $R^3$ is a group of formula $—COCH_2—$, $—NHCOCH_2—$, or $—CONHCOCH_2—$, $R_4$ is an alkyl group of 1 to 18 carbon atoms, an alkenyl group of 2 to 6 carbon atoms, a cycloalkyl group of 3 to 8 carbon atoms, a cycloalkylalkyl group of 4 to 10 carbon atoms, an aryl group of 4 to 25 carbon atoms, or an aralkyl group of 5 to 16 carbon atoms, $R^5$ has the same meaning as $R^4$ but may alternatively be a dialkylamino group of 2 to 8 carbon atoms or, if $R^4$ is an alkyl group, as defined above, $R^5$ may alternatively be an arylamino group of 4 to 8 carbon atoms, M is an atom of a metal or of a metalloid, t is 4, 5, or 6 and is one more than the valency of M, X is a halogen atom, with the proviso that one X may be a hydroxo group if M is antimony, t is 6, and each of the five remaining symbols X is a fluorine atom ; and g is 1 or 2, and (ii) an organic oxidant selected from quinones, peroxides, and iodoso aromatic compounds.

2. A composition according to claim 1, in which Ar is a phenyl, naphthyl, phenylene or naphthylene group, or a group of formula

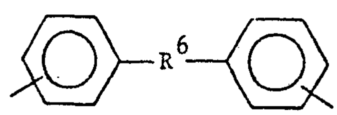

(IV)

wherein $R^6$ is a carbon-carbon bond, an ether oxygen atom, a sulfur atom, or a radical of formula $—CH_2—$, $—C(CH_3)_2—$, or $—SO_2—$, which groups may be substituted in the ring or rings by one or two alkyl groups, each of 1 to 4 carbon atoms, by one or two alkoxy groups, each of 1 to 4 carbon atoms, by one or two nitro groups, or by one or two chlorine, bromine, or fluorine atoms.

3. A composition according to claim 1, wherein each of $R^4$ and $R^5$ is an alkyl group of at most 12 carbon atoms, or a phenyl or naphthyl group which may be substituted in the ring or rings by one or two alkyl groups, each of 1 to 4 carbon atoms, by one or two alkoxy groups, each of 1 to 4 carbon atoms, or by one or two fluorine, chlorine, or bromine atoms.

4. A composition according to claim 1, wherein $MX_t^-$ is tetrafluoroborate, hexachlorobismuthate, hydroxopentafluoroantimonate, hexafluorophosphate, hexafluoroantimonate, or hexafluoroarsenate.

5. A composition according to claim 1, wherein (a) contains more than one 2,3-epoxypropyl group linked direct to an oxygen atom per average molecule.

6. A composition according to claim 5, wherein (a) is a diglycidyl ether, which may have been advanced, of a dihydric phenol or of a dihydric alcohol.

7. A composition according to any one of the preceding claims, containing 1 to 15 parts by weight of the mixture (b) per 100 parts by weight of (a).

8. A composition according to any one of the preceding claims, in which the mixture (b) comprises from 1 to 3 parts by weight of the organic oxidant per part by weight of the aromatic sulfoxonium salt.

9. Use of a composition according to claim 1 for producing coatings, bonds or moulding materials.

**Revendications**

1. Matières polymérisables à chaud caractérisées en ce qu'elles sont constituées : (a) d'un composé contenant au moins un radical époxy-2,3 propyle directement lié à un atome d'oxygène et (b) d'une quantité efficace (sur la polymérisation à chaud) d'un mélange constitué : (i) d'un sel de sulfoxonium aromatique répondant à la formule (III)

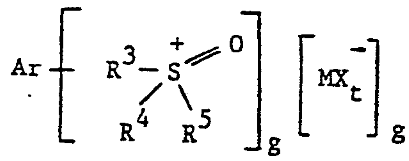

(III)

dans laquelle Ar représente un radical aromatique de valence égale à g qui contient de 4 à 25 atomes de carbone, $R^3$ représente un radical—$COCH_2$—, —$NHCOCH_2$— ou —$CONHCOCH_2$—, $R^4$ représente un radical alkyle contenant de 1 à 18 atomes de carbone, un radical alcényle contenant de 2 à 6 atomes de carbone, un radical cyclo-alkyle contenant de 3 à 8 atomes de carbone, un radical cyclo-alkyl-alkyle contenant de 4 à 10 atomes de carbone, un radical aryle contenant de 4 à 25 atomes de carbone ou un radical aralkyle contenant de 5 à 16 atomes de carbone, $R^5$ a la signification qui vient d'être donnée pour $R^4$ mais peut aussi représenter un radical dialkylamino contenant de 2 à 8 atomes de carbone ou, dans le cas où $R^4$ désigne un alkyle tel que défini ci-dessus, peut représenter un radical arylamino contenant de 4 à 8 atomes de carbone, M représente un atome de métal ou de métalloïde, t est égal à 4, à 5 ou à 6 et est supérieur d'une unité à la valence de M, X représente un atome d'halogène, avec la possibilité, pour l'un des X, d'être un radical hydroxo lorsque M représente l'antimoine, que t est égal à 6 et que les cinq autres X représentent chacun un atome de fluor, et g est égal à 1 ou à 2, et (ii) d'un agent d'oxydation organique choisi dans l'ensemble constitué par les quinones, les peroxydes et les composés iodosyliques aromatiques.

2. Matières selon la revendication 1, caractérisées en ce que Ar représente un radical phényle, naphtyle, phénylène ou naphtylène ou un radical répondant à la formule IV

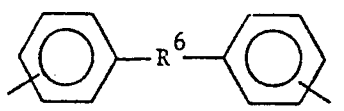

(IV)

dans laquelle $R^6$ représente une liaison carbone-carbone, un atome d'oxygène de fonction éther, un atome de soufre ou un radical —$CH_2$—, —$C(CH_3)_2$— ou —$SO_2$—, chacun des radicaux Ar qui viennent d'être cités pouvant porter, sur son ou ses noyaux, un ou deux radicaux alkyles ou alcoxy contenant chacun de 1 à 4 atomes de carbone, un ou deux radicaux nitro ou un ou deux atomes de chlore, de brome ou de fluor.

3. Matières selon la revendication 1, caractérisées en ce que $R^4$ et $R^5$ représentent chacun un radical alkyle contenant au plus 12 atomes de carbone, ou un radical phényle ou naphtyle qui porte éventuellement, sur son ou ses noyaux, un ou deux radicaux alkyles ou alcoxy contenant chacun de 1 à 4 atomes de carbone, ou un ou deux atomes de fluor, de chlore ou de brome.

4. Matières selon la revendication 1, caractérisées en ce que $MX_t^-$ représente l'ion tétrafluoroborate, hexachloro-bismuthate, hydroxo-pentafluoro-antimoniate, hexafluoro-phosphate, hexafluoroantimoniate ou hexafluoroarséniate.

5. Matières selon la revendication 1, caractérisées en ce que le composé (a) contient, par molécule moyenne, plus d'un radical époxy-2,3 directement lié à un atome d'oxygène.

6. Matières selon la revendication 5, caractérisées en ce que le composé (a) est un éther diglycidylique d'un diphénol ou d'un diol, éther qui est éventuellement pré-allongé.

7. Matières selon l'une quelconque des revendications précédentes, caractérisées en ce qu'elles contiennent de 1 à 15 parties en poids du mélange (b) pour 100 parties en poids du composé (a).

8. Matières selon l'une quelconque des revendications précédentes, caractérisées en ce que le mélange (b) est constitué de 1 à 3 parties en poids d'un oxydant organique (ii) par partie en poids d'un sel de sulfoxonium aromatique (i).

9. Application des matières selon la revendication 1 à la fabrication de revêtements, de collages ou de produits moulés.